# EUROPÄISCHE PATENTSCHRIFT

(11) **EP 1 964 797 B1**
(45) Veröffentlichungstag und Bekanntmachung des Hinweises auf die Patenterteilung: **30.12.2009**
(21) Anmeldenummer: 07023524.7
(22) Anmeldetag: 05.12.2007
(51) Int. Cl.: B65G 47/90, B23D 47/04

(54) **Greifeinrichtung, insbesondere Spannzange, zur Verwendung bei einer Vorschubvorrichtung für plattenförmige Werkstücke**
Gripping device, in particular collet, for use in a feed device for plate-shaped workpieces
Dispositif de saisie, en particulier pince de serrage, destiné à l'utilisation dans un dispositif d'avancement pour outils en forme de plaques

(30) Priorität: 28.02.2007 DE 202007002932 U
(43) Veröffentlichungstag der Anmeldung: 03.09.2008
(73) Patentinhaber: HOLZMA Plattenaufteiltechnik GmbH, 75365 Calw-Holzbronn (DE)
(72) Erfinder: Ziegler, Werner, 75365 Calw-Hirsau (DE)
(74) Vertreter: Dreiss

(56) Entgegenhaltungen:
- DE-A1- 19 502 659
- FR-A- 2 507 519

## Beschreibung

Die Erfindung betrifft eine Greifeinrichtung nach dem Oberbegriff des Anspruchs 1.

Eine solche Greifeinrichtung ist aus der DE 195 02 659 A1 bekannt. Nachteilig bei dieser Greifeinrichtung ist der hohe Platzbedarf sowie vor allem eine im Betrieb festgestellte nicht in allen Betriebsbedingungen präzise Halterung der gegriffenen plattenförmigen Werkstücke.

Aufgabe der vorliegenden Erfindung ist es daher, eine platzsparende und gleichzeitig Plattenstapel unterschiedlichster Höhe immer präzise greifende Greifeinrichtung zu schaffen.

Diese Aufgabe wird durch eine Greifeinrichtung mit den Merkmalen des Anspruchs 1 gelöst. Vorteilhafte Weiterbildungen sind in Unteransprüchen angegeben. Wichtige Merkmale der Erfindung sind darüber hinaus in der nachfolgenden Beschreibung aufgeführt und in der Zeichnung gezeigt. Dabei sei darauf hingewiesen, dass die Merkmale in ganz unterschiedlichen Kombinationen oder auch in Alleinstellung für die Erfindung wesentlich sein können, ohne dass hierauf jeweils explizit hingewiesen wird.

Ein wesentlicher Vorteil der erfindungsgemäßen Greifeinrichtung ist, dass durch die Positionierung der Schwenkachse des zweiten Klemmfingers dieser bei der Klemmbewegung die plattenförmigen Werkstücke in Richtung der Greifeinrichtung zieht, wo üblicherweise ein fester oder einstellbarer Anschlag vorhanden ist. Durch dieses Heranziehen der plattenförmigen Werkstücke werden diese an dem Anschlag ausgerichtet und exakt positioniert und ggf. gegen den Anschlag vorgespannt. Hierdurch wird die Präzision beim Bearbeiten der plattenförmigen Werkstücke, beispielsweise in einer Aufteilsäge, erheblich verbessert.

Der Angriffspunkt des zweiten Hebels am ersten Hebel kann oberhalb einer gedachten Geraden liegen, die die Schwenkachse des zweiten Klemmfingers am Träger mit der Schwenkachse des zweiten Klemmfingers am zweiten Hebel verbindet. Hierdurch wird ein günstigerer Kraftverlauf während des Klemmvorgangs erzielt.

In Weiterbildung hierzu wird vorgeschlagen, dass der Aktor linear arbeitet, und dass die Schwenkachse des Aktors am ersten Hebel koaxial ist zur Schwenkachse des zweiten Hebels am ersten Hebel. Dies führt zu einer erheblichen Vereinfachung der kinematischen Konstruktion.

Besonders bevorzugt ist es, wenn der zweite Klemmfinger am distalen Ende eines Schwenkarms angeordnet ist, dessen proximales Ende wiederum als vorzugsweise um ungefähr 90° nach oben abgewinkelter Winkelabschnitt ausgebildet ist, dessen oberes Ende am Träger schwenkbar befestigt ist. Hierdurch wird die Bauhöhe der Greifeinrichtung reduziert, was ihre Einsatzmöglichkeiten erweitert.

Der Schwenkarm kann zwei voneinander beabstandete, parallele Einzelarme umfassen, deren distale Enden durch mindestens einen ersten Steg miteinander starr verbunden sind. Hierdurch wird die Stabilität erhöht, und die Belastungen der einzelnen Lager werden vermindert. Gleichzeitig wird ein vergleichsweise torsionssteifer Schwenkarm geschaffen.

Letzteres gilt insbesondere dann, wenn die beiden Schwenkarme durch einen zweiten Steg miteinander verbunden sind, der gegenüber dem ersten Steg zum Aktor hin versetzt angeordnet ist, und wenn die Schwenkachse des zweiten Hebels an den beiden Einzelarmen zwischen den beiden Stegen liegt. Darüber hinaus baut eine solche Greifeinrichtung besonders kompakt.

Dabei können der erste und der zweite Hebel jeweils zueinander parallele und voneinander beabstandete Hebelsegmente umfassen, und eine Kolbenstange des Aktors kann unmittelbar zwischen den Hebelsegmenten des ersten Hebels und die Hebelsegmente des zweiten Hebels können unmittelbar außen vom ersten Hebel angeordnet sein. Damit wird eine gegenüber einer vertikalen Ebene symmetrische Greifeinrichtung geschaffen, so dass Biegemomente um eine Längsrichtung der Greifeinrichtung und somit auch eine Verwindung um die Längsrichtung der Greifeinrichtung verhindert werden.

Die Steifigkeit der Greifeinrichtung wird nochmals erhöht, wenn der Träger einen oben im Wesentlichen offenen Kasten umfasst, und wenn an und zwischen dessen Seitenwänden der zweite Klemmfinger, der erste Hebel und der Aktor schwenkbar befestigt sind. Darüber hinaus wird die Sicherheit im Betrieb einer solchen Greifeinrichtung erhöht, weil die Komponenten der Kinematik quasi "gekapselt" sind, und es wird auch deren Verschmutzungsanfälligkeit reduziert.

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Seitenansicht einer Plattenaufteilsäge mit einer Vorschubvorrichtung für plattenförmige Werkstücke und einer dort angebrachten Greifeinrichtung;
- Figur 2: eine perspektivische und teilweise transparente Darstellung der Greifeinrichtung von Figur 1;
- Figur 3: einen schematischen Längsschnitt durch die Greifeinrichtung von Figur 1 in deren geöffnetem Zustand;
- Figur 4: eine Darstellung ähnlich Figur 3 bei geschlossener Greifeinrichtung

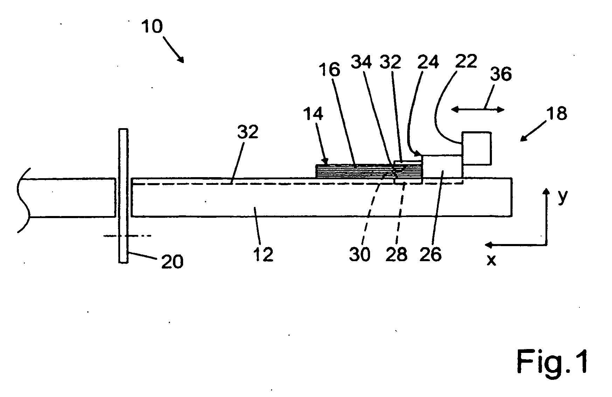

Eine Plattenaufteilanlage für plattenförmige Werkstücke trägt in Figur 1 insgesamt das Bezugszeichen 10. Sie umfasst einen Zuführtisch 12, auf dem ein Stapel 14 von plattenförmigen Werkstücken 16.liegt. Eine Vorschubvorrichtung 18 kann den Stapel 14 in Richtung einer Säge 20 bewegen. Durch diese kann der Stapel 14 in unterschiedliche Teilstapel aufgeteilt werden.

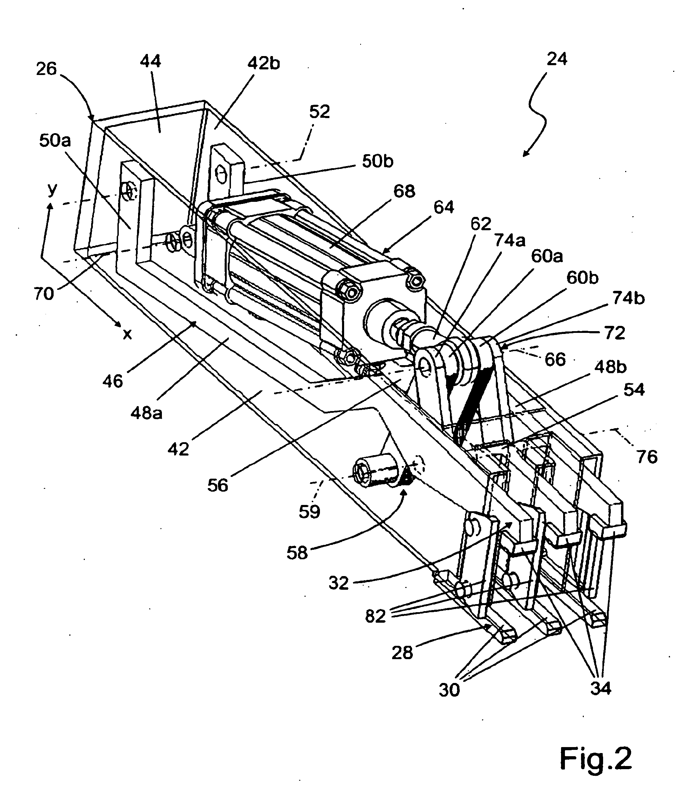

Die Vorschubvorrichtung 18 umfasst einen Programmschieber 22, der üblicherweise einen quer zur Blattebene von Figur 1 verlaufenden Träger umfasst. An dem Programmschieber 22 sind mehrere durch Spannzangen gebildete Greifeinrichtungen 24 angebracht. Diese umfassen wiederum einen in Figur 1 nur symbolisch dargestellten Träger 26, der gegenüber dem Programmschieber 22 in vertikaler Richtung bewegt werden kann. An dem Träger 26 ist ein erster und in den Figuren unterer Klemmfinger 28 starr befestigt. Wie aus Figur 2 ersichtlich ist, umfasst der erste Klemmfinger 28 drei nebeneinander angeordnete Klemmabschnitte 30, die in jeweiligen Nuten 32 im Zuführtisch 12 versenkt angeordnet sind. Die Spannzange 24 umfasst ferner einen zweiten und in den Figuren oberen Klemmfinger 32, der am Träger 26 auf noch näher darzustellende Art und Weise schwenkbar beweglich befestigt ist. Auch der zweite Klemmfinger 32 umfasst drei nebeneinander angeordnete Klemmabschnitte 34, die den Klemmabschnitten 30 des ersten Klemmfingers 28 gegenüberliegen.

Wie aus Figur 1 ersichtlich ist, kann der Stapel 14 der plattenförmigen Werkstücke 16 zwischen den beiden Klemmfingern 28 und 32 der Spannzange 24 verklemmt werden. Bei einer Bewegung des Programmschiebers 22 in Vorschubrichtung (Doppelpfeil 36 in Figur 1) wird der zwischen den beiden Klemmfingern 28 und 32 verspannte bzw. verklemmte Stapel 14 in Vorschubrichtung 36 bewegt.

Der genaue Aufbau der Spannzange 24 ist aus Figur 2 ersichtlich: Der Träger 26 besteht im Wesentlichen aus einem oben und unten im Wesentlichen offenen Kasten mit einer ersten Seitenwand 42a, einer zweiten Seitenwand 42b und einer hinteren, zum Programmschieber 22 zeigenden Stirnwand 44. Der zweite Klemmfinger 32 beziehungsweise dessen Klemmabschnitte 34 sind am distalen Ende eines Schwenkarms 46 angeordnet, der wiederum zwei voneinander beabstandete parallel Einzelarme 48a und 48b umfasst. Deren proximale Enden sind als um ungefähr 90° nach oben abgewinkelt Winkelabschnitte 50a und 50b ausgebildet, deren oberes Ende wiederum an der entsprechenden benachbarten Seitenwand 42a bzw. 42b des Kastens 26 schwenkbar um eine Schwenkachse 52 befestigt ist. Die beiden distalen Enden der Einzelarme 48a und 48b sind, kurz vor den Klemmabschnitten 34 des zweiten Klemmfingers 32, durch einen ersten Steg 54 starr miteinander verbunden. Die beiden Einzelarme 48a und 48b sind darüber hinaus noch durch einen zweiten Steg 56 miteinander verbunden, der gegenüber dem ersten Steg 54 in Richtung zur hinteren Stirnwand 44 hin versetzt angeordnet ist. Alternativ oder zusätzlich hierzu könnte auch noch im Bereich der Winkelabschnitte 50a und 50b bzw. in der Nähe der Schwenkachse 52 ein solcher Steg vorhanden sein.

An den beiden Seitenwänden 42a und 42b des Kastens 38 ist ferner ein erster Hebel 58 um eine Schwenkachse 59 schwenkbar befestigt. Der erste Hebel 58 umfasst dabei zwei voneinander beabstandete und zueinander parallele Hebelsegmente 60a und 60b. Der erste Hebel 58 erstreckt sich ausgehend von der Schwenkachse 59 durch eine zwischen den beiden Einzelarmen 48a und 48b und den beiden Stegen 54 und 56 gebildete Öffnung (ohne Bezugszeichen) im Schwenkarm 46 hindurch. Das obere Ende des ersten Hebels 58 ist mit einer Kolbenstange 62 eines pneumatischen Aktors 64 um eine Schwenkachse 66 schwenkbar verbunden. Ein Zylindergehäuse 68 des Aktors 64 ist am von der Kolbenstange 62 abgewandten Ende um eine Schwenkachse 70 verschwenkbar mit den beiden Seitenwänden 42a und 42b des Kastens 26 verbunden.

Die Spannzange 24 umfasst einen zweiten Hebel 72, der wiederum zwei zueinander parallele und voneinander beabstandete Hebelsegmente 74a und 74b umfasst. Deren unteres Ende ist um eine Schwenkachse 76 verschwenkbar mit dem zwischen den beiden Stegen 54 und 56 gelegenen Abschnitt (ohne Bezugszeichen) des jeweils benachbarten Einzelarms 48a bzw. 48b schwenkbar verbunden. Die oberen Enden der beiden Hebelsegmente 74a und 74b sind jeweils außen vom ersten Hebel 58 angeordnet und um die gleiche Schwenkachse 66 wie der erste Hebel 58 mit der Kolbenstange 62 schwenkbar verbunden. Das Ende der Kolbenstange 62 ist also zwischen den beiden Hebelsegmenten 60a und 60b und letztere wiederum zwischen den beiden Hebelsegmenten 74a und 74b angeordnet.

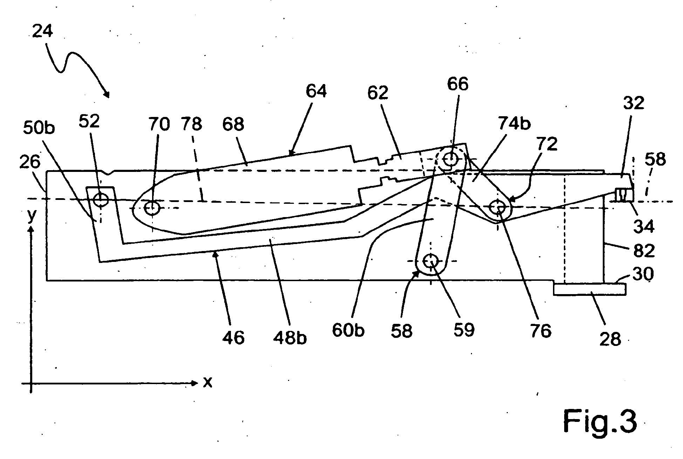

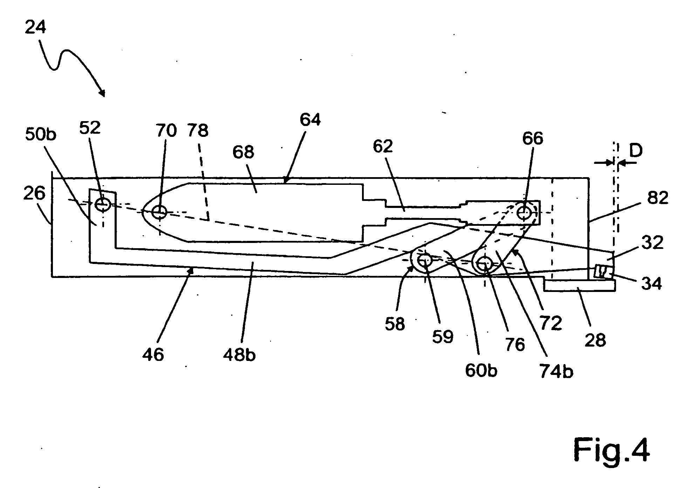

Wie insbesondere aus den Figuren 3 und 4 ersichtlich ist, liegt der durch die Schwenkachse 66 des zweiten Hebels 72 an der Kolbenstange 62 wird am ersten Hebel 58 gebildete Angriffspunkt oberhalb einer gedachten Geraden 78, die die Schwenkachse 52 des zweiten Klemmfingers 32 am Träger 26 mit der Schwenkachse 76 des zweiten Klemmfingers 32 am zweiten Hebel 72 verbindet.

In Figur 3 ist die Spannzange 24 in geöffnetem Zustand dargestellt, in dem sich der zweite Klemmfinger 32 mit seinen Klemmabschnitten 34 in voll geöffneter Stellung befindet, also seine maximal obere Position einnimmt. Man erkennt, dass in dieser voll geöffneten Stellung des zweiten Klemmfingers 32 die Schwenkachse 52 des zweiten Klemmfingers 32 am Träger 26 in etwa auf gleicher Höhe (Y-Richtung) liegt, wie eine zum ersten Klemmfinger 28 bzw. Klemmabschnitt 30 parallele Klemmebene 80 des zweiten Klemmfingers 32. Hierdurch wird bewirkt, dass sich der zweite Klemmfinger 32 mit seinen Klemmabschnitten 34 bei einer Schließbewegung der Spannzange 24 in Richtung von vorderen Stirnflächen 82 des Kastens 26 bewegt, die insoweit einen Anschlag für die zwischen den beiden Klemmabschnitten 30 und 34 gehaltenen Werkstücke 16 bilden. Bei der in Figur 4 dargestellten maximal geschlossenen Stellung des zweiten Klemmfingers 32 ist diese Bewegung der Klemmabschnitte 34 zum Anschlag 82 hin maximal und in Figur 4 mit D bezeichnet. Ebenfalls aus Figur 4 ist ersichtlich, dass die Bauhöhe der Spannzange 24 sehr gering ist und dass bei vollständig geschlossener Spannzange 24, wie in Figur 4 dargestellt, sämtliche Kinematikteile innerhalb des Kastens 26 aufgenommen ist.

## Patentansprüche

1. Greifeinrichtung (24), insbesondere Spannzange, zur Verwendung bei einer Vorschubvorrichtung. (18) für plattenförmige Werkstücke (16), mit der mindestens ein plattenförmiges Werkstück (16) gegriffen und längs einer Vorschubrichtung (36) bewegt werden kann, mit mindestens einem an einem Träger (26) starr befestigten ersten Klemmfinger (28) und mindesten einem zweiten Klemmfinger (32), der am Träger (26) beweglich derart befestigt ist, dass das Werkstück (16) zwischen den beiden Klemmfingern (28, 32) verklemmt werden kann, mit einem Aktor (64), der an einem ersten Hebel (58), der an dem Träger (26) schwenkbar befestigt ist, angreift, und mit einem zweiten Hebel (72), der den ersten Hebel (58) mit dem zweiten Klemmfinger (32) wenigstens mittelbar verbindet, **dadurch gekennzeichnet, dass** die Schwenkachse (52) des zweiten Klemmfingers (32) am Träger (26) in der voll geöffneten Stellung des zweiten Klemmfingers (32) mindestens auf gleicher Höhe liegt wie eine zum ersten Klemmfinger (28) parallele Klemmebene (58) des zweiten Klemmfingers (32).

2. Greifeinrichtung (24) nach Anspruch 1, **dadurch gekennzeichnet, dass** der Angriffspunkt (66) des zweiten Hebels am ersten Hebel oberhalb einer gedachten Geraden (78) liegt, die die Schwenkachse (52) des zweiten Klemmfingers (32) am Träger (26) mit der Schwenkachse (76) des zweiten Klemmfingers (32) am zweiten Hebel (72) verbindet.

3. Greifeinrichtung (24) nach Anspruch 2, **dadurch gekennzeichnet, dass** der Aktor (64) linear arbeitet, und dass die Schwenkachse (66) des Aktors (68) am ersten Hebel (58) koaxial ist zur Schwenkachse (66) des zweiten Hebels (72) am ersten Hebel (58).

4. Greifeinrichtung (24) nach einem der vorhergehenden Ansprüche, **dadurch gekennzeichnet, dass** der zweite Klemmfinger (32) am distalen Ende eines Schwenkarms (46) angeordnet ist, dessen proximales Ende wiederum als vorzugsweise um ungefähr 90° nach oben abgewinkelter Winkelabschnitt (50) ausgebildet ist, dessen oberes Ende am Träger (26) schwenkbar befestigt ist.

5. Greifeinrichtung (24) nach Anspruch 4, **dadurch gekennzeichnet, dass** der Schwenkarm (46) zwei voneinander beabstandete, parallele Einzelarme (48a, 48b) umfasst, deren distale Enden durch mindestens einen ersten Steg (54) miteinander starr verbunden sind.

6. Greifeinrichtung (24) nach Anspruch 5, **dadurch gekennzeichnet, dass** die beiden Einzelarme (48a, 48b) durch einen zweiten Steg (56) miteinander verbunden sind, der gegenüber dem ersten Steg (54) zum Aktor (64) hin versetzt angeordnet ist, und dass die Schwenkachse (72) des zweiten Hebels an den beiden Einzelarmen (48a, 48b) zwischen den beiden Stegen (54, 56) liegt.

7. Greifeinrichtung (24) nach einem der Ansprüche 5 oder 6 und nach Anspruch 3, **dadurch gekennzeichnet, dass** der erste Hebel (58) und der zweite Hebel (72) jeweils zwei zueinander parallele und voneinander beabstandete Hebelsegmente (60a, 60b, 74a, 74b) umfassen, und dass eine Kolbenstange (62) des Aktors (64) unmittelbar zwischen den Hebelsegmenten (60a, 60b) des ersten Hebels (58) und die Hebelsegmente (74a, 74b) des zweiten Hebels (72) unmittelbar außen vom ersten Hebel (58) angeordnet sind.

8. Greifeinrichtung (24) nach einem der vorhergehenden Ansprüche, **dadurch gekennzeichnet, dass** der Träger (26) einen oben im Wesentlichen offenen Kasten umfasst, an und zwischen dessen Seitenwänden (42a, 42b) der zweite Klemmfinger (32), der erste Hebel (58) und der Aktor (64) schwenkbar befestigt sind.

## Claims

1. Gripping device (24), in particular collet, for use in a feed device (18) for plate-shaped workpieces (16), with which at least one plate-shaped workpiece (16) can be gripped and moved along in a feed direction (36), with at least a first clamping finger (28) rigidly attached to a carrier (26) and at least one second clamping finger (32) which is movably attached to said carrier (26) such that the workpiece (16) can be clamped between the two clamping fingers (28, 32), with an actuator (64) which engages with a first lever (58) which pivots on the carrier (26), and with a second lever (72) which links the first lever (58) with the second clamping finger (32) at least indirectly, **characterised in that** the pivot axis (52) of the second clamping finger (32), in the fully open position of the second clamping finger (32), is located on the carrier (26) at least at the same height as a clamping plane (58) of the second clamping finger (32) parallel to the first clamping finger (28).

2. Gripping device (24) in accordance with claim 1, **characterised in that** the actuating point (66) of the second lever is located above an imaginary straight line (78) which joins the pivot axis (52) of the second clamping finger (32 on said carrier (26) with the pivot axis (76) of the second clamping finger (32) on the second lever (72).

3. Gripping device (24) in accordance with claim 2, **characterised in that** the actuator (64) operates linearly and that the pivot axis (66) of the actuator (68) on the first lever (58) is coaxial to the pivot axis (66) of the second lever (72) on the first lever (58).

4. Gripping device (24) in accordance with one of the preceding claims, **characterised in that** the second clamping finger (32) is arranged at the distal end of a pivoted arm (46), whose proximal end is in turn formed as an angular section (50), preferably angled upwards through about 90°, whose upper end is secured and pivoted on carrier (26).

5. Gripping device (24) in accordance with claim 4, **characterised in that** the pivoted arm (46) comprises two parallel individual arms (48a, 48b) set apart from each other whose distal ends are rigidly linked to each other by means of at least one first bridge (54).

6. Gripping device (24) in accordance with claim 5, **characterised in that** both individual arms (48a, 48b) are linked together by means of a second bridge (56) which is offset from the actuator (64) compared with the first bridge (54), and that the pivot axis (72) of the second lever is located on both individual arms (48a, 48b) between the two bridges (54, 56).

7. Gripping device (24) in accordance with one of claims 5 or 6 and in accordance with claim 3, **characterised in that** the first lever (58) and the second lever (72) each include two lever segments (60a, 60b, 74a, 74b) parallel to and offset from each other, and that a piston rod (62) of the actuator (64) is arranged directly between the lever segments (60a, 60b) of the first lever (58) and the lever segments (74a, 74b) of the second lever (72) immediately outside the first lever (58).

8. Gripping device (24) in accordance with one of the preceding claims, **characterised in that** the carrier (26) comprises a box essentially open on top to whose and between whose side walls (42a, 42b) the second clamping finger (32), the first lever (58) and the actuator (64) are secured so that they can pivot.

## Revendications

1. Dispositif de préhension (24), en particulier pince de serrage, destiné à être utilisé avec un dispositif de déplacement (18) pour des pièces (16) en forme de plaques, par lequel au moins une pièce (16) en forme de plaque peut être saisie et être déplacée le long d'une direction d'avance (36), comportant au moins un premier doigt de serrage (28) fixé de manière rigide à un support (26), et au moins un deuxième doigt de serrage (32) fixé de manière mobile sur le support (26), de telle sorte que la pièce (16) peut être bloquée entre les deux doigts de serrage (28, 32), comportant un actionneur (64), qui entre en prise avec un premier levier (58) fixé de manière pivotante sur le support (26), et avec un deuxième levier (72), par lequel le premier levier (58) est relié au moins indirectement au deuxième doigt de serrage (32), **caractérisé en ce que**, dans la position complètement ouverte du deuxième doigt de serrage (32), l'axe de pivotement (52) dudit deuxième doigt de serrage (32) sur le support (26) se situe au moins à la même hauteur qu'un plan de serrage (58) du deuxième doigt de serrage (32), lequel plan est parallèle au premier doigt de serrage (28).

2. Dispositif de préhension (24) selon la revendication 1, **caractérisé en ce que** le point de contact (66) du deuxième levier contre le premier levier se situe au-dessus d'une droite imaginaire (78), par laquelle l'axe de pivotement (52) du deuxième doigt de serrage (32) sur le support (26) est relié à l'axe de pivotement (76) du deuxième doigt de serrage (32) sur le deuxième levier (72).

3. Dispositif de préhension (24) selon la revendication 2, **caractérisé en ce que** l'actionneur (64) fonctionne linéairement, et **en ce que** l'axe de pivotement (66) de l'actionneur (64) sur le premier levier (58) est coaxial à l'axe de pivotement (66) du deuxième levier (72) sur le premier levier (58).

4. Dispositif de préhension (24) selon l'une quelconque des revendications précédentes, **caractérisé en ce que** le deuxième doigt de serrage (32) est disposé au niveau de l'extrémité distale d'un bras pivotant (46), dont l'extrémité proximale est réalisée, pour sa part, sous forme de tronçon angulaire (50), qui est coudé vers le haut de préférence sur 90° environ et dont l'extrémité supérieure est fixée de manière pivotante sur le support (26).

5. Dispositif de préhension (24) selon la revendication 4, **caractérisé en ce que** le bras pivotant (46) comporte deux bras individuels (48a, 48b) parallèles, qui sont situés à distance l'un de l'autre et dont les extrémités distales sont reliées de manière rigide entre elles par au moins une première traverse (54).

6. Dispositif de préhension (24) selon la revendication 5, **caractérisé en ce que** les deux bras individuels (48a, 48b) sont reliés entre eux par une deuxième traverse (56) qui, par rapport à la première traverse (54) est disposée en étant décalée vers l'actionneur (64), et **en ce que** l'axe de pivotement (72) du deuxième levier se situe au niveau des deux bras individuels (48a, 48b) entre les deux traverses (54, 56).

7. Dispositif de préhension (24) selon la revendication 5 ou 6 et selon la revendication 3, **caractérisé en ce que** le premier levier (58) et le deuxième levier (72) comportent chacun deux segments (60a, 60b, 74a, 74b) parallèles entre eux et situés à distance les uns des autres, et **en ce qu'**une tige de piston (62) de l'actionneur (64) est disposée directement entre les segments (60a, 60b) du premier levier (58) et les segments (74a, 74b) du deuxième levier (72), directement à l'extérieur du premier levier (58).

8. Dispositif de préhension (24) selon l'une quelconque des revendications précédentes, **caractérisé en ce que** le support (26) comporte un caisson sensiblement ouvert sur le dessus, sur et entre les parois latérales (42a, 42b) duquel sont fixés de manière pivotante le deuxième doigt de serrage (32), le premier levier (58) et l'actionneur (64).
